# EUROPEAN PATENT APPLICATION

(11) **EP 4 112 666 A1**
(43) Date of publication of application: **04.01.2023**
(21) Application number: 21760140.0
(22) Date of filing: 25.02.2021
(51) Int. Cl.: C08F 293/00, C09J 153/00

(54) **HIGH-MOLECULAR-WEIGHT ACRYLIC TRIBLOCK COPOLYMER AND PRESSURE-SENSITIVE ADHESIVE COMPOSITION CONTAINING SAME**

(30) Priority: 28.02.2020 JP 2020032767
(71) Applicant: Kuraray Co., Ltd., Kurashiki-shi, Okayama 710-0801 (JP)
(72) Inventor: TAKASAKI, Tomoe, Tsukuba-shi, Ibaraki 305-0841 (JP); ONO, Tomohiro, Tsukuba-shi, Ibaraki 305-0841 (JP)
(74) Representative: Müller-Boré & Partner Patentanwälte PartG mbB
(86) International application number: PCT/JP2021/006990
(87) International publication number: WO 2021/172398

(57) **Abstract**

Provided are an acrylic block copolymer having excellent holding power and high processability, and an adhesive composition which includes the copolymer and satisfies both of the above properties. An acrylic triblock copolymer includes a polymer block (A) including methacrylic acid ester units, and a polymer block (B) including 95 mass% or more of acrylic acid ester units represented by the general formula (1): CH₂=CH-COOR¹ [wherein R¹ denotes a C7-C12 organic group], the copolymer having a triblock structure represented by (A)-(B)-(A), the copolymer having a weight average molecular weight (Mw) of 110,000 to 250,000, the total content of the blocks (A) at both ends being 18 mass% or less.

## Description

### TECHNICAL FIELD

The present invention relates to a high-molecular acrylic triblock copolymer suitably used in applications such as adhesives, and to an adhesive composition including the copolymer.

### BACKGROUND ART

Adhesives are used for adhesive products having an adhesive layer on at least part of a surface of a base layer, such as adhesive sheets, adhesive films and adhesive tapes. The conventional adhesives that are frequently used are of solution type which includes a base polymer, such as rubber-based adhesives and acrylic adhesives. In addition, hot melt adhesives and aqueous emulsion-type adhesives have recently come into use. In particular, acrylic adhesives have gained a wide use because of their excellent transparency, weather resistance and durability. Acrylic adhesives including acrylic block copolymers have been presented from the points of view of application properties and adhesion properties. For example, adhesive compositions including an acrylic block copolymer, a tackifier resin and a plasticizer are known (see Patent Literatures 1 and 2).

### CITATION LIST

### PATENT LITERATURE

Patent Literature 1: WO 2007/029783
Patent Literature 2: JP-A-2016-44203

### SUMMARY OF INVENTION

### TECHNICAL PROBLEM

The acrylic block copolymers, and the adhesive compositions including the acrylic block copolymers that are described in Patent Literatures 1 and 2 are characterized by adhesion properties at low temperatures, but still have room for improvement in holding power. Enhancing the holding power of adhesives is often accompanied by a decrease in processability. A problem to be solved by the present invention is therefore to provide an acrylic block copolymer having excellent holding power and high processability, and an adhesive composition which includes the copolymer and satisfies both of the above properties.

### SOLUTION TO PROBLEM

Specifically, aspects of the present invention reside in the following.
[1] An acrylic triblock copolymer comprising:
   a polymer block (A) including methacrylic acid ester units, and
   a polymer block (B) including 95 mass% or more of acrylic acid ester units represented by the general formula (1):

      CH₂=CH-COOR¹

      [wherein R¹ denotes a C7-C12 organic group],
   the copolymer having a triblock structure represented by (A)-(B)-(A),
   the copolymer having a weight average molecular weight (Mw) of 110,000 to 250,000,
   the total content of the blocks (A) at both ends being 18 mass% or less.
[2] The acrylic triblock copolymer according to [1], wherein the total content of the blocks (A) at both ends is 6 to 14 mass%.
[3] An adhesive composition comprising the acrylic triblock copolymer described in [1] or [2].

### ADVANTAGEOUS EFFECTS OF INVENTION

The acrylic block copolymer provided according to the present invention has excellent holding power and high processability. The adhesive composition of the present invention includes the copolymer and satisfies both of the above properties.

### DESCRIPTION OF EMBODIMENTS

The present invention will be described in detail hereinbelow. In the specification, "(meth)acrylate ester" is a general term indicating both "methacrylate ester" and "acrylate ester", and "(meth)acrylic" is a general term indicating both "methacrylic" and "acrylic".

An acrylic triblock copolymer of the present invention includes a polymer block (A) including methacrylic acid ester units, and a polymer block (B) including 95 mass% or more of acrylic acid ester units represented by the following general formula (1):

CH₂=CH-COOR¹ (1)

[wherein R¹ denotes a C7-C12 organic group]. The copolymer has a triblock structure represented by (A)-(B)-(A), a weight average molecular weight (Mw) of 110,000 to 250,000, and a total content of the blocks (A) at both ends of 18 mass% or less.

### <Polymer blocks (A)>

Examples of the methacrylic acid esters for forming structural units in the polymer blocks (A) in the acrylic triblock copolymer of the present invention include methacrylic acid esters having no functional groups such as methyl methacrylate, ethyl methacrylate, isopropyl methacrylate, n-propyl methacrylate, n-butyl methacrylate, isobutyl methacrylate, sec-butyl methacrylate, tert-butyl methacrylate, n-hexyl methacrylate, cyclohexyl methacrylate, 2-ethylhexyl methacrylate, n-octyl methacrylate, lauryl methacrylate, tridecyl methacrylate, stearyl methacrylate, isobornyl methacrylate, phenyl methacrylate and benzyl methacrylate; and methacrylic acid esters having a functional group such as methoxyethyl methacrylate, 2-aminoethyl methacrylate, glycidyl methacrylate and tetrahydrofurfuryl methacrylate.

Among those described above, methacrylic acid esters having no functional groups are preferable in order to enhance the heat resistance and durability of the polymer that is obtained. More preferred esters are methyl methacrylate, ethyl methacrylate, tert-butyl methacrylate, cyclohexyl methacrylate, isobornyl methacrylate and phenyl methacrylate, with methyl methacrylate being more preferable. Methyl methacrylate is more preferable also because the phase separation between the polymer block (A) and the polymer block (B) becomes clearer so that the adhesive composition exhibits particularly high cohesion force. The polymer block (A) may be composed of a single kind of a methacrylic acid ester, or two or more kinds of methacrylic acid esters.

The proportion of the methacrylic acid ester units in the polymer block (A) is preferably 60 mass% or more, more preferably 80 mass% or more, and still more preferably 90 mass% or more of the polymer block (A). This proportion of the methacrylic acid ester units ensures that the resin that is obtained will have clearer phase separation.

The weight average molecular weight (Mw) of the polymer block (A) is not particularly limited, but is preferably in the range of 1,000 to 15,000, and more preferably in the range of 4,000 to 15,000. If the weight average molecular weight (Mw) of the polymer block (A) is below this range, the acrylic triblock copolymer that is obtained has a lowered cohesion force and may fail to exhibit sufficient holding power. If the weight average molecular weight (Mw) of the polymer block (A) is higher than the above range, the acrylic triblock copolymer that is obtained has an increased melt viscosity and may be poor in productivity and processability.

The weight average molecular weight (Mw) may be measured by the method described in Examples.

### <Polymer block (B)>

In the acrylic triblock copolymer of the present invention, the polymer block (B) includes 95 mass% or more of units from an acrylic acid ester (1) represented by the general formula (1) described hereinabove. By virtue of the acrylic acid ester (1) units representing 95 mass% or more, the acrylic triblock copolymer of the present invention attains excellent cohesion force. To ensure excellent tack, the polymer block (B) preferably includes 97 mass% or more of the acrylic acid ester (1) units, more preferably includes 99 mass% or more of the acrylic acid ester (1) units, and still more preferably consists solely of the acrylic acid ester (1) units.

Examples of the acrylate ester (1) of the formula (1) that is a structural unit of the polymer block (B) include 2-ethylhexyl acrylate, n-octyl acrylate, isooctyl acrylate, decyl acrylate, isobornyl acrylate, lauryl acrylate, benzyl acrylate and phenoxyethyl acrylate.

Among the acrylic acid esters described above, 2-ethylhexyl acrylate, n-octyl acrylate, isooctyl acrylate, lauryl acrylate and phenoxyethyl acrylate are preferable in order to ensure that the polymer that is obtained will attain enhancements in flexibility, cold resistance and adhesion properties at low temperatures. To ensure that the polymer that is obtained will attain excellent adhesion properties (such as tack and adhesion force) at low temperatures (10 to -40°C) and will exhibit stable adhesion force in a wide range of release rate, 2-ethylhexyl acrylate, n-octyl acrylate and isooctyl acrylate are more preferable. 2-Ethylhexyl acrylate is particularly preferable because the phase separation between the polymer block (A) and the polymer block (B) becomes clearer so that the adhesive composition exhibits very high cohesion force.

The ratio (molecular weight distribution: Mw/Mn) of the weight average molecular weight (Mw) to the number average molecular weight (Mn) of the whole of the acrylic triblock copolymer of the present invention is preferably 1.0 to 1.5. For the reason that the adhesive composition exhibits high cohesion force at high temperatures, the ratio is more preferably 1.0 to 1.4, and still more preferably 1.0 to 1.3.

In addition to the acrylic acid ester (1), the polymer block (B) may include an acrylic acid ester (2) represented by the following general formula (2):

CH₂=CH-COOR² (2)

[wherein R² denotes a C4-C6 organic group]. That is, the polymer block (B) may be a copolymer block of the acrylic acid ester (1) described above and the acrylic acid ester (2). Examples of the acrylic acid esters (2) include acrylic acid esters having no functional groups such as n-butyl acrylate, isobutyl acrylate, sec-butyl acrylate, tert-butyl acrylate, amyl acrylate, isoamyl acrylate, n-hexyl acrylate, cyclohexyl acrylate and phenyl acrylate; and acrylic acid esters having a functional group such as ethoxyethyl acrylate, diethylaminoethyl acrylate, 2-hydroxyethyl acrylate, 2-aminoethyl acrylate and tetrahydrofurfuryl acrylate.

Among those described above, acrylic acid esters having no functional groups are preferable, and n-butyl acrylate and n-hexyl acrylate are more preferable in order to ensure that the polymer that is obtained will attain enhancements in flexibility, cold resistance and adhesion properties at low temperatures.

When the polymer block (B) includes units from the acrylic acid ester (2), the contents of the acrylic acid ester (1) units and the acrylic acid ester (2) units in the polymer block (B) may be determined by ¹H-NMR measurement in accordance with the process described in Examples.

When the polymer block (B) includes a plurality of types of acrylic acid ester units, the polymer block may be a random copolymer, a block copolymer or a tapered block copolymer of such acrylic acid esters.

### <Acrylic triblock copolymers>

The acrylic triblock copolymer of the present invention may be produced by any method without limitation as long as the polymer that is obtained satisfies the requirements in the present invention regarding the chemical structure. Methods in accordance with known techniques may be adopted. In general, a block copolymer with a narrow molecular weight distribution is obtained by the living polymerization of monomers that will form structural units. Examples of the living polymerization processes include living polymerization using an organic rare earth metal complex as a polymerization initiator, living anionic polymerization performed with an organic alkali metal compound as a polymerization initiator in the presence of a mineral acid salt such as an alkali metal or alkaline earth metal salt, living anionic polymerization performed with an organic alkali metal compound as a polymerization initiator in the presence of an organoaluminum compound, and atom transfer radical polymerization (ATRP).

Among the production processes described above, living anionic polymerization performed with an organic alkali metal compound as a polymerization initiator in the presence of an organoaluminum compound is advantageous in that the block copolymer that is obtained has high transparency, is less odorous because of little residual monomers, and generates fewer bubbles after the application of an adhesive composition including the copolymer. Other advantages are that the methacrylic acid ester polymer blocks have a highly syndiotactic molecular structure to provide an increase in the heat resistance of the adhesive composition, and that the living polymerization is feasible under relatively mild temperature conditions and thus the environmental load in industrial production (mainly the electricity applied to refrigerators to control the polymerization temperature) is small.

Examples of the organoaluminum compounds include those organoaluminum compounds represented by the following general formula (3).

AlR³R⁴R⁵ (3)

(In the formula, R³, R⁴ and R⁵ are each independently an optionally substituted alkyl group, an optionally substituted cycloalkyl group, an optionally substituted aryl group, an optionally substituted aralkyl group, an optionally substituted alkoxy group, an optionally substituted aryloxy group or an N,N-disubstituted amino group, or R³ is any of these groups and R⁴ and R⁵ together form an optionally substituted arylenedioxy group.)

From points of view such as high living properties in the polymerization and easy handling, preferred organoaluminum compounds represented by the general formula (3) are, among others, isobutylbis(2,6-di-tert-butyl-4-methylphenoxy)aluminum, isobutylbis(2,6-di-tert-butylphenoxy)aluminum and isobutyl[2,2'-methylenebis(4-methyl-6-tert-butylphenoxy)]aluminum.

Examples of the organic alkali metal compounds include alkyllithiums and alkyldilithiums such as n-butyllithium, sec-butyllithium, isobutyllithium, tert-butyllithium, n-pentyllithium and tetramethylenedilithium; aryllithiums and aryldilithiums such as phenyllithium, p-tolyllithium and lithiumnaphthalene; aralkyllithiums and aralkyldilithiums such as benzyllithium, diphenylmethyllithium and dilithium formed by the reaction of diisopropenylbenzene and butyllithium; lithiumamides such as lithiumdimethylamide; and lithium alkoxides such as methoxylithium and ethoxylithium. These compounds may be used singly, or two or more may be used in combination. In particular, alkyllithiums are preferable because of high polymerization initiation efficiency. Tert-butyllithium and sec-butyllithium are more preferable, and sec-butyllithium is still more preferable.

The living anionic polymerization is usually carried out in the presence of a solvent that is inactive in the polymerization reaction. Examples of the solvents include aromatic hydrocarbons such as benzene, toluene and xylene; halogenated hydrocarbons such as chloroform, methylene chloride and carbon tetrachloride; and ethers such as tetrahydrofuran and diethyl ether. Toluene is suitably used.

The acrylic triblock copolymer of the present invention may be produced by, for example, repeating as many times as desired a step in which a desired polymer block (such as a polymer block (A) or a polymer block (B)) is formed onto a desired living polymer end obtained by polymerization of a monomer, and terminating the polymerization reaction. Specifically, the acrylic triblock copolymer may be produced by, for example, performing polymerization with an organic alkali metal compound as a polymerization initiator in the presence of an organoaluminum compound through a plurality of steps including a first step of polymerizing a monomer for forming a first polymer block, a second step of polymerizing a monomer for forming a second polymer block and a third step of polymerizing a monomer for forming a third polymer block, and terminating the polymerization reaction by reacting the active end of the resultant polymer with a terminator such as an alcohol. By this method, a triblock copolymer composed of polymer block (A)-polymer block (B)-polymer block (A) may be produced.

The polymerization temperature is preferably 0 to 100°C when the reaction forms a polymer block (A), and is preferably -50 to 50°C when the reaction forms a polymer block (B). If the polymerization temperature is below this range, the reaction is slow and takes a long time to complete. If, on the other hand, the polymerization temperature is higher than the above range, more living polymer ends are deactivated to broaden the molecular weight distribution or to cause a failure to obtain a desired block copolymer. The polymerization of a polymer block (A) and that of a polymer block (B) may be each accomplished in 1 second to 20 hours.

The weight average molecular weight (Mw) of the acrylic triblock copolymer of the present invention is 110,000 to 250,000, preferably 120,000 to 230,000, and more preferably 140,000 to 220,000. If the Mw is less than 110,000, the cohesion force may be inferior. If the Mw is more than 250,000, the copolymer may be difficult to handle during manufacturing.

It is important that the content of the polymer blocks (A) in the acrylic triblock copolymer of the present invention be 18 mass% or less. The content is preferably 6 to 14 mass%, and more preferably 7 to 13 mass%. If the content of the polymer blocks (A) is outside the above range, tack and processability may be lowered. The polymer blocks (A) present at both ends of the acrylic triblock copolymer of the present invention may have the same or different monomer compositions and may have the same or different weight average molecular weights. The content of the polymer blocks (A) in the acrylic triblock copolymer is the total content of the polymer blocks (A) at both ends.

### <Adhesive compositions>

Aspects of the present invention include an adhesive composition including the acrylic triblock copolymer of the present invention.

In the adhesive composition of the present invention, the content of the acrylic triblock copolymer of the present invention is preferably 18 to 94 mass%, more preferably 20 to 87 mass%, and still more preferably 25 to 83 mass%. The adhesive composition may contain other polymers; and additives such as softeners, heat stabilizers, light stabilizers, antistatic agents, flame retardants, foaming agents, colorants, dyes, refractive index modifiers, fillers, curing agents and anti-blocking agents, while still achieving the advantageous effects of the present invention. These additional polymers and additives may be used singly, or two or more may be used in combination.

Examples of the additional polymers include acrylic resins such as polymethyl methacrylate and (meth)acrylic acid ester copolymers; olefin resins such as polyethylene, ethylene-vinyl acetate copolymer, polypropylene, polybutene-1, poly-4-methylpentene-1 and polynorbornene; ethylene ionomers; styrene resins such as polystyrene, styrene-maleic anhydride copolymer, high-impact polystyrene, AS resins, ABS resins, AES resins, AAS resins, ACS resins and MBS resins; styrene-methyl methacrylate copolymer; polyester resins such as polyethylene terephthalate, polybutylene terephthalate and polylactic acid; polyamides such as nylon 6, nylon 66 and polyamide elastomers; polycarbonates; polyvinyl chloride; polyvinylidene chloride; polyvinyl alcohols; ethylene-vinyl alcohol copolymers; polyacetals; polyvinylidene fluoride; polyurethanes; modified polyphenylene ethers; polyphenylene sulfide; silicone rubber-modified resins; acrylic rubbers; silicone rubbers; styrene-based thermoplastic elastomers such as SEPS, SEBS and SIS; and olefin rubbers such as IR, EPR and EPDM. Among those described above, from the point of view of the compatibility with the acrylic triblock copolymer of the present invention, acrylic resins, ethylene-vinyl acetate copolymer, AS resins, polylactic acid, polyvinylidene fluoride and styrene-based thermoplastic elastomers are preferable, and (meth)acrylic acid ester copolymers are more preferable. When a styrene-based thermoplastic elastomer is added to the adhesive composition, the content thereof is preferably 1 to 65 parts by mass, more preferably 1 to 50 parts by mass, and still more preferably 1 to 30 parts by mass per 100 parts by mass of the acrylic triblock copolymer of the present invention.

The (meth)acrylic acid ester copolymers described above are preferably diblock copolymers or triblock copolymers that include at least one polymer block (C) containing methacrylic acid ester units and at least one polymer block (D) containing acrylic acid ester units. (These copolymers exclude the acrylic triblock copolymers of the present invention.) The content of such a copolymer is preferably 1 to 200 parts by mass, more preferably 1 to 100 parts by mass, and still more preferably 2 to 50 parts by mass per 100 parts by mass of the acrylic triblock copolymer of the present invention.

Examples of the fillers include inorganic fibers such as glass fibers and carbon fibers, and organic fibers; and inorganic fillers such as calcium carbonate, talc, carbon black, titanium oxide, silica, clay, barium sulfate and magnesium carbonate. The addition of inorganic fibers or organic fibers imparts durability to the adhesive composition that is obtained. The incorporation of inorganic fillers makes the obtainable adhesive composition resistant to heat and weathering.

The addition of a curing agent allows the acrylic triblock copolymer and the adhesive composition of the present invention to be suitably used as a curable adhesive. The curing agent may be a light curing agent such as a UV curing agent, or a heat curing agent, with examples including such compounds as benzoins, benzoin ethers, benzophenones, anthraquinones, benzils, acetophenones and diacetyls. Specific examples include benzoin, α-methylolbenzoin, α-t-butylbenzoin, benzoin methyl ether, benzoin ethyl ether, benzoin-n-propyl ether, benzoin isopropyl ether, α-methoxybenzoin methyl ether, benzoin phenyl ether, benzophenone, 9,10-anthraquinone, 2-ethyl-9,10-anthraquinone, benzil and 2,2-dimethoxy-1,2-diphenylethan-1-one (2,2-dimethoxy-2-phenylacetophenone). The curing agents may be used singly, or two or more may be used in combination.

To increase the effect of the curing agent, the adhesive composition of the present invention may include additional components, for example, monomers such as organic acids including acrylic acid, methacrylic acid, α-cyanoacrylic acid, α-halogenated acrylic acid, crotonic acid, cinnamic acid, sorbic acid, maleic acid and itaconic acid; esters including acrylic acid esters, methacrylic acid esters, crotonic acid esters and maleic acid esters; acrylamide; methacrylamide; acrylamide derivatives including N-methylol acrylamide, N-hydroxyethyl acrylamide and N,N-(dihydroxyethyl) acrylamide; methacrylamide derivatives including N-methylol methacrylamide, N-hydroxyethyl methacrylamide and N,N-(dihydroxyethyl) methacrylamide; vinyl esters; vinyl ethers; mono-N-vinyl derivatives; and styrene derivatives; and oligomers including these monomers as structural components. To attain higher durability, it is preferable to add esters such as acrylic acid esters, methacrylic acid esters, crotonic acid esters and maleic acid esters; vinyl ethers; styrene derivatives; and oligomers including these monomers as structural components. In addition to these monomers, crosslinking agents including a difunctional or polyfunctional monomer or oligomer may be added.

The incorporation of an anti-blocking agent in the adhesive composition of the present invention is expected to provide an enhancement in handleability. Examples of the anti-blocking agents include fatty acids such as stearic acid and palmitic acid; fatty acid metal salts such as calcium stearate, zinc stearate, magnesium stearate, potassium palmitate and sodium palmitate; waxes such as polyethylene waxes, polypropylene waxes and montanic acid waxes; low-molecular weight polyolefins such as low-molecular weight polyethylene and low-molecular weight polypropylene; acrylic resin powders; polyorganosiloxanes such as dimethylpolysiloxane; octadecylamine, alkyl phosphates, fatty acid esters, amide resin powders such as ethylenebisstearylamide, fluororesin powders such as ethylene tetrafluoride resin, molybdenum disulfide powders, silicone resin powders, silicone rubber powders and silica.

The adhesive composition of the present invention may be produced by any method without limitation. For example, the composition may be produced by mixing the components with use of a known mixer or kneader such as a kneader ruder, an extruder, a mixing roll or a Banbury mixer, usually at a temperature in the range of 100 to 250°C. Alternatively, the composition may be produced by mixing the components as a solution in an organic solvent and thereafter evaporating the organic solvent. The adhesive composition obtained may be used by being thermally melted or may be dissolved into a solvent to serve as a solution-type adhesive. Examples of the solvents include toluene, ethyl acetate, ethylbenzene, methylene chloride, chloroform, tetrahydrofuran, methyl ethyl ketone, dimethyl sulfoxide, and toluene-ethanol mixed solvent. Among these, toluene, ethylbenzene, ethyl acetate and methyl ethyl ketone are preferable.

When the adhesive composition of the present invention is used by being thermally melted, low melt viscosity is preferable from the points of view of processability and handleability. On the other hand, high melt viscosity is preferable to ensure that the adhesive composition will concurrently satisfy adhesion properties and high holding power.

The adhesive composition of the present invention is suitably used in an adhesive product in the form of, for example, an adhesive layer including the adhesive composition or a laminate (for example, a laminate film or a laminate sheet) including such an adhesive layer.

### <Laminates>

When the adhesive composition of the present invention is used by being thermally melted, the composition may be formed into an adhesive layer in a shape such as a sheet or a film by a method such as, for example, hot melt coating, T-die extrusion, blown-film extrusion, calendering or lamination. For example, the adhesive composition that has been thermally melted may be applied onto a film or sheet of a heat-resistant material such as polyethylene terephthalate by use of a hot melt coater to form an adhesive layer. When the adhesive composition of the present invention has a high melt viscosity, for example, when the melt viscosity at 180°C exceeds 20,000 mPa·s, the composition may be advantageously thermally melted at a higher temperature by a hot melt coating method in which the hot melt is applied from the T-die onto the support without any contact. This method is preferable from the points of view of control of the thickness of the adhesive layer, uniformity, and the heat resistance required of the support.

Alternatively, the adhesive composition of the present invention may be dissolved into a solvent and the solution may be applied onto a film or a sheet to form an adhesive layer. After the solution is applied, the solvent may be removed by any conventional drying method without limitation. It is, however, preferable that drying be performed in a plurality of stages. When drying is performed in a plurality of stages, it is more preferable that drying in the first stage be performed at a relatively low temperature to prevent the formation of bubbles by rapid evaporation of the solvent, and drying in the second and later stages be performed at a high temperature to remove the solvent sufficiently.

The concentration of the adhesive composition in the solution may be determined appropriately in consideration of factors such as the solubility of the composition in the solvent, and the viscosity of the solution that is obtained. A preferred lower limit is 5 mass%, and a preferred upper limit is 70 mass%.

The laminate described above may be obtained by laminating an adhesive layer including the adhesive composition of the present invention, together with a substrate selected from various types of substrates such as papers, cellophanes, plastic materials including acrylic resins, fabrics, wood and metals. Because the adhesive composition of the present invention has excellent transparency and weather resistance, a transparent laminate may be advantageously obtained by selecting a substrate layer made of a transparent material. Examples of the substrate layers made of a transparent material include, but are not limited to, substrate layers made of polyethylene terephthalate, triacetylcellulose, polyvinyl alcohol, cycloolefin resin, styrene-methyl methacrylate copolymer, polypropylene, polyethylene, polyvinyl chloride, ethylene-vinyl acetate copolymer, polycarbonate, polymethyl methacrylate, copolymers of polymers such as polyethylene or polypropylene with various monomers, mixtures of two or more kinds of the above polymers, and glass.

Examples of the configurations of the laminates include, but are not limited to, a two-layered configuration including an adhesive layer made of the inventive adhesive composition and a substrate layer, a three-layered configuration including two substrate layers and an adhesive layer made of the inventive adhesive composition (substrate layer/adhesive layer/substrate layer), a four-layered configuration including a substrate layer, two adhesive layers (a) and (b) made of different types of the inventive adhesive compositions, and a substrate layer (substrate layer/adhesive layer (a)/adhesive layer (b)/substrate layer), a four-layered configuration including a substrate layer, an adhesive layer (a) made of the inventive adhesive composition, an adhesive layer (c) made of a material outside the scope of the present invention, and a substrate layer (substrate layer/adhesive layer (a)/adhesive layer (c)/substrate layer), and a five-layered configuration including three substrate layers and two adhesive layers made of the inventive adhesive composition (substrate layer/adhesive layer/substrate layer/adhesive layer/substrate layer).

In the laminate, the thickness of the adhesive layer made of the adhesive composition of the present invention is preferably 2 to 200 µm from the points of view of applicability, adhesion properties and handleability of the adhesive layer, and is more preferably 3 to 100 µm, and still more preferably 4 to 60 µm.

The thickness ratio in the laminate is not particularly limited. From the points of view of the adhesion properties, durability and handleability of the adhesive product that is obtained, it is preferable that substrate layer/adhesive layer = 1/1000 to 1000/1, and it is more preferable that the ratio be in the range of 1/200 to 200/1. When the laminate includes a plurality of substrate layers and a plurality of adhesive layers, the thickness ratio is the ratio of the total thicknesses.

To produce the laminate, an adhesive layer and a substrate layer may be formed separately and laminated together by a method such as lamination, or an adhesive layer may be formed directly on a substrate layer. Alternatively, an adhesive layer and a substrate layer may be coextruded to form a layered structure at the same time. That is, the laminate may be, for example, a coextruded film or a coextruded sheet.

To increase the adhesion force between the substrate layer and the adhesive layer in the laminate, the surface of the substrate layer may be treated beforehand by surface treatment such as corona discharge treatment or plasma discharge treatment. Alternatively, an anchor layer may be formed by applying, for example, a resin having adhesion properties onto the surface of at least one of the adhesive layer and the substrate layer.

Examples of the resins used in the anchor layers include ethylene-vinyl acetate copolymer, ionomers, block copolymers (for example, styrene triblock copolymers such as SIS and SBS, and diblock copolymers), ethylene-acrylic acid copolymer and ethylene-methacrylic acid copolymer. There may be one, or two or more anchor layers.

The anchor layer may be formed by any method without limitation. For example, an anchor layer may be formed by coating a solution of the above resin onto the substrate layer, or by thermally melting an anchoring composition which contains components including the above resin and applying the melt onto the surface of the substrate layer by a method such as T-die extrusion.

An anchor layer may be formed in such a manner that the above resin which will form an anchor layer and the adhesive composition of the present invention are coextruded to form a unit including an anchor layer and an adhesive layer on the surface of the substrate layer. Alternatively, the anchoring resin and the adhesive composition may be laminated sequentially onto the surface of the substrate layer. In the case where the substrate layer is a plastic material, such a plastic material for forming the substrate layer, the resin as an anchor layer and the adhesive composition may be coextruded at the same time.

Adhesives including the adhesive composition of the present invention may be used in various applications. Adhesive layers including the adhesive composition may be used singly as adhesive sheets, and laminates including such an adhesive layer may find various applications. Examples of the applications include adhesives and adhesive tapes, films or sheets for protection such as surface protection, masking, tying, packaging, office uses, labeling, decoration and display, bonding, dicing tapes, sealing, corrosion protection, waterproofing, medical and sanitary uses, prevention of glass scattering, electrical insulation, electronic holding and fixation, semiconductor manufacturing, optical display films, adhesive optical films, shielding from electromagnetic waves, and sealing of electric and electronic parts. Specific examples are described below.

Surface-protective adhesives, and surface-protective adhesive products such as tapes and films may be used for various materials such as metals, plastics, rubbers and wood. Specifically, they may be used to protect the surface of coatings, metals during plastic deformation or deep drawing, automobile parts and optical parts. Examples of the automobile parts include painted exterior panels, wheels, mirrors, windows, lights and light covers. Examples of the optical parts include various image display devices such as liquid crystal displays, organic EL displays, plasma displays and field emission displays; optical disk films such as polarizing films, polarizing plates, retardation plates, light guide plates, diffusion plates and DVDs; and precision fine coated faceplates for electronic and optical applications.

Examples of the applications of masking adhesives, tapes, films and the like include masking during the manufacturing of printed circuit boards or flexible printed circuit boards; masking during the plating and soldering of electronic devices; and masking during the manufacturing of vehicles such as automobiles, during the painting of vehicles and buildings, during printing, and during parting in civil engineering works.

Examples of the tying applications include wire harnesses, electric wires, cables, fibers, pipes, coils, winding wires, steel materials, ducts, plastic bags, foods, vegetables, and flowers and ornamental plants.

Examples of the packaging applications include packaging of heavy goods, export packaging, sealing of cardboard boxes, and sealing of cans.

Examples of the office uses include general office works, sealing, repairing of books, drawing and memos.

Examples of the labeling applications include price labels, product descriptions, tags, POPs, stickers, stripes, name plates, decoration and advertisements.

Examples of the labels include labels whose substrates are, for example, paper materials such as papers, processed papers (for example, aluminum-deposited paper, aluminum-laminated paper, varnish-coated paper and resin-coated paper) and synthetic papers; and films of such materials as cellophanes, plastic materials, fabrics, wood and metals. Specific examples of the substrates include quality papers, art papers, cast papers, thermal papers, foil papers; polyethylene terephthalate films, polyvinyl chloride films, OPP films, polylactic acid films, synthetic papers, thermal synthetic papers and over laminated films. In particular, because of its excellent transparency and weather resistance, the adhesive composition of the present invention may be suitably used for labels having a transparent substrate. Further, the adhesive composition of the present invention is negligibly discolored with time and thus may be suitably used for thermal labels having thermal paper or thermal synthetic paper as the substrate.

Examples of the adherends to which the labels are laminated include plastic products such as plastic bottles and foamed plastic cases; paper products and cardboard products such as cardboard boxes; glass products such as glass bottles; metal products; and other inorganic material products such as ceramics.

Labels which include a laminate including an adhesive layer formed of the adhesive composition of the present invention do not significantly increase adhesion force during storage at temperatures slightly above room temperature (for example, at 40°C) and thus can be removed without residual adhesive after use. Further, such labels can be laminated to adherends even at low temperatures (-40 to +10°C) and do not separate even when stored at low temperatures (-40 to +10°C).

Examples of the decoration and display applications include danger indication seals, line tapes, wire markings, luminous tapes and reflective sheets.

In the adhesive optical film applications, for example, an adhesive layer is formed on at least part or the entirety of one or both sides of such optical films as polarizing films, polarizing plates, retardation films, viewing angle expansion films, brightness enhancement films, antireflection films, antiglare films, color filters, light guide plates, diffusion films, prism sheets, electromagnetic wave shielding films, near infrared absorbing films, functional composite optical films, films for ITO lamination, impact resistant films and visibility enhancement films. The adhesive optical films may be such that the surface of the above optical films is protected with a protective film which includes an adhesive layer formed of the adhesive composition of the present invention. The adhesive optical films may be suitably used for various image display devices such as liquid crystal display devices, PDPs, organic EL display devices, electronic papers, game machines and mobile terminals.

Examples of the electrical insulation applications include protective coating or insulation of coils, and interlayer insulation in, for example, motors and transformers.

Examples of the electronic holding and fixation applications include carrier tapes, packaging, fixation of cathode-ray tubes, splicing and rib enforcement.

Examples of the semiconductor manufacturing applications include protection of silicone wafers.

Examples of the bonding applications include various bonding uses, bonding uses in automobiles, trains, electrical equipment, printing plate fixation, architecture and nameplate fixation, general household uses, and bonding to rough surfaces, irregular surfaces and curved surfaces.

Examples of the sealing applications include sealing for the purposes of thermal insulation, vibration insulation, waterproofing, moisture proofing, soundproofing and dust proofing.

Examples of the corrosion protection and waterproofing applications include corrosion protection of gas pipes and water pipes, corrosion protection of large-diameter pipes, and corrosion protection of civil engineering and construction structures.

Examples of the medical and sanitary applications include percutaneous absorption drug applications such as analgesics and antiphlogistics (plasters and cataplasms), ischemic heart disease treatment agents, female hormone supplements, bronchodilators, cancer pain relievers, stop-smoking drugs, cold patches, antipruritic patches and keratin softening agents; various tape applications such as first-aid adhesive plasters (containing fungicides), surgical dressings, surgical tapes, bandages, hemostasis ties, tapes for human excrement disposal devices (colostomy device-fixing tapes), suture tapes, antibacterial tapes, fixing tapes, pressure-sensitive adhesive bandages, oral mucosal tapes, sporting tapes and hair removal tapes; cosmetic applications such as facial packs, eye moisturizing sheets and horny remover packs; cooling sheets, pocket warmers, dust proofing, waterproofing and pest trapping.

Examples of the electronic and electric parts to be sealed include liquid crystal monitors and solar cells.

### EXAMPLES

The present invention will be described in detail hereinbelow based on Examples. However, it should be construed that the scope of the present invention is not limited to such Examples. In Production Examples described later, monomers and other compounds were dried and purified by conventional methods and were used after deaerated with nitrogen. Such monomers and other compounds were transferred and supplied to the reaction system, in a nitrogen atmosphere.

Properties in Examples and Comparative Examples were evaluated by the following methods.

### (1) Weight average molecular weight (Mw), number average molecular weight (Mn) and molecular weight distribution (Mw/Mn) of polymers (polymer blocks) and block copolymers

The molecular weights were determined by gel permeation chromatography (hereinafter, abbreviated as GPC) relative to polystyrene standards.
•Apparatus: GPC apparatus "HLC-8020" manufactured by TOSOH CORPORATION
•Separation columns: "TSKgel GMHXL", "G4000HXL" and "G5000HXL" manufactured by TOSOH CORPORATION were connected in series.
•Eluent: Tetrahydrofuran
•Flow rate of eluent: 1.0 ml/min
•Column temperature: 40°C
•Detection method: Differential refractive index (RI)

### (2) Contents of polymer blocks in block copolymers

These contents were determined by ¹H-NMR measurement.
- Apparatus: Nuclear magnetic resonance apparatus "JNM-LA400" manufactured by JEOL Ltd.
- Deuterated solvent: Deuterated chloroform

In a ¹H-NMR spectrum, signals near 3.6 ppm and near 4.0 ppm were assigned to the ester groups (-O-CH₃) in methyl methacrylate units and to the ester groups (-O-CH₂-CH₂-CH₂-CH₃ or -O-CH₂-CH(-CH₂-CH₂)-CH₂-CH₂-CH₂-CH₃) in n-butyl acrylate or 2-ethylhexyl acrylate units, respectively. The contents of polymer blocks were determined based on the integral ratio of these peaks.

### (3) 180° Peel strength

A 25 µm thick adhesive tape prepared by the method described later was cut to a width of 25 mm and a length of 100 mm and was laminated to a stainless steel (SUS304) plate (a bright annealed (hereinafter, written as BA) plate), a polyethylene (PE) plate and a polymethyl methacrylate (PMMA) plate. The samples were stored at room temperature (for 24 hours after the lamination, unless otherwise mentioned), and the tape was peeled at 23°C and a rate of 300 mm/min in the 180° direction to measure the peel strength.

### (4) Holding power

The holding power was measured in accordance with ASTM D4498-07 (2015). Specifically, a 25 µm thick adhesive tape that was prepared was laminated to a stainless steel (SUS304) plate (a BA plate) over an area of 25 mm in width and 25 mm in length, and a 500 g load was hung from the tape. The temperature was increased from 40°C to 205°C at a rate of 0.5°C/min. The temperature at which the tape fell was measured. The higher the temperature, the higher the holding power.

### (5) Ball tack

The ball tack was measured in accordance with JIS Z0237: 2009. Specifically, a 25 µm thick adhesive tape was arranged so as to have an inclination angle of 30°, and balls conforming to the ball tack method were rolled thereon to determine the number of the largest ball which stopped on the adhesive tape.

Acrylic block copolymers used in Examples and Comparative Examples were synthesized by the methods described later in Synthetic Examples.

### (6) Processability

The acrylic block copolymers described in Table 1 were each dissolved into toluene to give a toluene solution having a concentration of 30 mass%. The solutions were cast to form 1 mm thick sheets. The dynamic viscoelasticity was measured under the following conditions to determine logE' (storage modulus). The processability of the acrylic copolymer was evaluated as good (AA) when logE' < 5 at 210°C. The processability of the acrylic copolymer was evaluated as poor (CC) when logE' ≥ 5 at 210°C.
- Apparatus: "Rheogel-E4000" manufactured by UBM
- Mode: Tension/temperature dependence
- Waveform: Sinusoidal
- Frequency: 1 Hz
- Measurement temperature range: 50°C to 250°C
- Heat-up rate: 3°C/min

### <<Synthetic Example 1>> [Synthesis of acrylic triblock copolymer A]

(1) A 2 L three-necked flask was fitted with a three-way cock, and the inside was purged with nitrogen. While performing stirring at room temperature, the flask was loaded with 990 g of toluene and 11.2 g of 1,2-dimethoxyethane, subsequently with 31.1 g of a toluene solution containing 15.6 mmol of isobutylbis(2,6-di-t-butyl-4-methylphenoxy)aluminum, and further with 0.82 g of a sec-butyllithium in cyclohexane solution containing 1.39 mmol of sec-butyllithium.
(2) Subsequently, 11.0 g of methyl methacrylate was added. The reaction liquid was yellow at first and turned to colorless after stirring was performed at room temperature for 60 minutes.
(3) Subsequently, the inside temperature of the polymerization liquid was lowered to -30°C, and 157 g of 2-ethylhexyl acrylate was added dropwise over a period of 2 hours. After the completion of the dropwise addition, the mixture was stirred at -30°C for 5 minutes.
(4) Further, 12.4 g of methyl methacrylate was added, and the mixture was stirred at room temperature overnight.
(5) The polymerization reaction was terminated by the addition of 17.3 g of methanol. The resultant reaction liquid was poured into 15 kg of methanol, and thereby a deposit was precipitated. Thereafter, the deposit was recovered and was dried. Consequently, 180 g of an acrylic triblock copolymer A was obtained.

### <<Synthetic Example 2>> [Synthesis of acrylic triblock copolymer B]

(1) A 2 L three-necked flask was fitted with a three-way cock, and the inside was purged with nitrogen. While performing stirring at room temperature, the flask was loaded with 1023 g of toluene and 19.3 g of 1,2-dimethoxyethane, subsequently with 35.6 g of a toluene solution containing 17.9 mmol of isobutylbis(2,6-di-t-butyl-4-methylphenoxy)aluminum, and further with 1.42 g of a sec-butyllithium in cyclohexane solution containing 2.42 mmol of sec-butyllithium.
(2) Subsequently, 22.9 g of methyl methacrylate was added. The reaction liquid was yellow at first and turned to colorless after stirring was performed at room temperature for 60 minutes.
(3) Subsequently, the inside temperature of the polymerization liquid was lowered to -30°C, and 251 g of 2-ethylhexyl acrylate was added dropwise over a period of 2 hours. After the completion of the dropwise addition, the mixture was stirred at -30°C for 5 minutes.
(4) Further, 25.0 g of methyl methacrylate was added, and the mixture was stirred at room temperature overnight.
(5) The polymerization reaction was terminated by the addition of 10.6 g of methanol. The resultant reaction liquid was poured into 15 kg of methanol, and thereby a deposit was precipitated. Thereafter, the deposit was recovered and was dried. Consequently, 361 g of an acrylic triblock copolymer B was obtained.

### <<Synthetic Example 3>> [Synthesis of acrylic triblock copolymer C]

(1) A 2 L three-necked flask was fitted with a three-way cock, and the inside was purged with nitrogen. While performing stirring at room temperature, the flask was loaded with 931 g of toluene and 28.7 g of 1,2-dimethoxyethane, subsequently with 35.8 g of a toluene solution containing 18.0 mmol of isobutylbis(2,6-di-t-butyl-4-methylphenoxy)aluminum, and further with 2.11 g of a sec-butyllithium in cyclohexane solution containing 3.60 mmol of sec-butyllithium.
(2) Subsequently, 25.6 g of methyl methacrylate was added. The reaction liquid was yellow at first and turned to colorless after stirring was performed at room temperature for 60 minutes.
(3) Subsequently, the inside temperature of the polymerization liquid was lowered to -30°C, and 286 g of 2-ethylhexyl acrylate was added dropwise over a period of 2 hours. After the completion of the dropwise addition, the mixture was stirred at -30°C for 5 minutes.
(4) Further, 28.9 g of methyl methacrylate was added, and the mixture was stirred at room temperature overnight.
(5) The polymerization reaction was terminated by the addition of 11.7 g of methanol. The resultant reaction liquid was poured into 15 kg of methanol, and thereby a deposit was precipitated. Thereafter, the deposit was recovered and was dried. Consequently, 387 g of an acrylic triblock copolymer C was obtained.

### <<Synthetic Example 4>> [Synthesis of acrylic triblock copolymer D]

(1) A 2 L three-necked flask was fitted with a three-way cock, and the inside was purged with nitrogen. While performing stirring at room temperature, the flask was loaded with 1100 g of toluene and 15.0 g of 1,2-dimethoxyethane, subsequently with 26.2 g of a toluene solution containing 6.89 mmol of isobutylbis(2,6-di-t-butyl-4-methylphenoxy)aluminum, and further with 1.1 g of a sec-butyllithium in cyclohexane solution containing 1.91 mmol of sec-butyllithium.
(2) Subsequently, 21.0 g of methyl methacrylate was added. The reaction liquid was yellow at first and turned to colorless after stirring was performed at room temperature for 60 minutes.
(3) Subsequently, the inside temperature of the polymerization liquid was lowered to -30°C, and 268 g of 2-ethylhexyl acrylate was added dropwise over a period of 2 hours. After the completion of the dropwise addition, the mixture was stirred at -30°C for 5 minutes.
(4) Further, 29.9 g of methyl methacrylate was added, and the mixture was stirred at room temperature overnight.
(5) The polymerization reaction was terminated by the addition of 16 g of methanol. The resultant reaction liquid was poured into 15 kg of methanol, and thereby a deposit was precipitated. Thereafter, the deposit was recovered and was dried. Consequently, 310 g of an acrylic triblock copolymer D was obtained.

### <<Synthetic Example 5>> [Synthesis of acrylic triblock copolymer E]

(1) A 3 L three-necked flask was fitted with a three-way cock, and the inside was purged with nitrogen. While performing stirring at room temperature, the flask was loaded with 1864 g of toluene and 18.1 g of 1,2-dimethoxyethane, subsequently with 41.1 g of a toluene solution containing 20.7 mmol of isobutylbis(2,6-di-t-butyl-4-methylphenoxy)aluminum, and further with 1.33 g of a sec-butyllithium in cyclohexane solution containing 2.26 mmol of sec-butyllithium.
(2) Subsequently, 15.0 g of methyl methacrylate was added. The reaction liquid was yellow at first and turned to colorless after stirring was performed at room temperature for 60 minutes.
(3) Subsequently, the inside temperature of the polymerization liquid was lowered to -30°C, and 262 g of n-butyl acrylate was added dropwise over a period of 2 hours. After the completion of the dropwise addition, the mixture was stirred at -30°C for 5 minutes.
(4) Further, 16.1 g of methyl methacrylate was added, and the mixture was stirred at room temperature overnight.
(5) The polymerization reaction was terminated by the addition of 24 g of methanol. The resultant reaction liquid was poured into 15 kg of methanol, and thereby a deposit was precipitated. Thereafter, the deposit was recovered and was dried. Consequently, 293 g of an acrylic triblock copolymer E was obtained.

### <<Synthetic Example 6>> [Synthesis of acrylic diblock copolymer F]

(1) A 2 L three-necked flask was fitted with a three-way cock, and the inside was purged with nitrogen. While performing stirring at room temperature, the flask was loaded with 1206 g of toluene and 28.3 g of 1,2-dimethoxyethane, subsequently with 24.6 g of a toluene solution containing 9.8 mmol of isobutylbis(2,6-di-t-butyl-4-methylphenoxy)aluminum, and further with 1.81 g of a sec-butyllithium in cyclohexane solution containing 3.09 mmol of sec-butyllithium.
(2) Subsequently, 37.1 g of methyl methacrylate was added. The reaction liquid was yellow at first and turned to colorless after stirring was performed at room temperature for 60 minutes.
(3) Subsequently, the inside temperature of the polymerization liquid was lowered to -30°C, and 118 g of 2-ethylhexyl acrylate was added dropwise over a period of 2 hours. After the completion of the dropwise addition, the mixture was stirred at -30°C for 5 minutes.
(4) The polymerization reaction was terminated by the addition of 10 g of methanol. The resultant reaction liquid was poured into 15 kg of methanol, and thereby a deposit was precipitated. Thereafter, the deposit was recovered and was dried. Consequently, 120 g of an acrylic diblock copolymer F was obtained.

### <<Synthetic Example 7>> [Synthesis of acrylic triblock copolymer G]

(1) A 2 L three-necked flask was fitted with a three-way cock, and the inside was purged with nitrogen. While performing stirring at room temperature, the flask was loaded with 800 g of toluene and 34.0 g of 1,2-dimethoxyethane, subsequently with 15.7 g of a toluene solution containing 7.92 mmol of isobutylbis(2,6-di-t-butyl-4-methylphenoxy)aluminum, and further with 2.5 g of a sec-butyllithium in cyclohexane solution containing 4.30 mmol of sec-butyllithium.
(2) Subsequently, 15.0 g of methyl methacrylate was added. The reaction liquid was yellow at first and turned to colorless after stirring was performed at room temperature for 60 minutes.
(3) Subsequently, the inside temperature of the polymerization liquid was lowered to -30°C, and 124 g of 2-ethylhexyl acrylate was added dropwise over a period of 2 hours. After the completion of the dropwise addition, the mixture was stirred at -30°C for 5 minutes.
(4) Further, 12.8 g of methyl methacrylate was added, and the mixture was stirred at room temperature overnight.
(5) The polymerization reaction was terminated by the addition of 7.4 g of methanol. The resultant reaction liquid was poured into 15 kg of methanol, and thereby a deposit was precipitated. Thereafter, the deposit was recovered and was dried. Consequently, 300 g of an acrylic triblock copolymer G was obtained.

### <<Synthetic Example 8>> [Synthesis of acrylic triblock copolymer H]

(1) A 3 L three-necked flask was fitted with a three-way cock, and the inside was purged with nitrogen. While performing stirring at room temperature, the flask was loaded with 1430 g of toluene and 70.1 g of 1,2-dimethoxyethane, subsequently with 24.3 g of a toluene solution containing 12.2 mmol of isobutylbis(2,6-di-t-butyl-4-methylphenoxy)aluminum, and further with 5.11 g of a sec-butyllithium in cyclohexane solution containing 6.65 mmol of sec-butyllithium.
(2) Subsequently, 16.3 g of methyl methacrylate was added. The reaction liquid was yellow at first and turned to colorless after stirring was performed at room temperature for 60 minutes.
(3) Subsequently, the inside temperature of the polymerization liquid was lowered to -30°C, and 382 g of 2-ethylhexyl acrylate was added dropwise over a period of 2 hours. After the completion of the dropwise addition, the mixture was stirred at -30°C for 5 minutes.
(4) Further, 20.2 g of methyl methacrylate was added, and the mixture was stirred at room temperature overnight.
(5) The polymerization reaction was terminated by the addition of 12 g of methanol. The resultant reaction liquid was poured into 15 kg of methanol, and thereby a deposit was precipitated. Thereafter, the deposit was recovered and was dried. Consequently, 450 g of an acrylic triblock copolymer H was obtained.

The weight average molecular weights (Mw) of the acrylic triblock copolymers A to H were determined by the GPC measurement described hereinabove. Further, the contents of the polymer blocks composed of methyl methacrylate units in the acrylic triblock copolymers A to H were determined by ¹H-NMR measurement.

Table 1 describes the type of blocks, the weight average molecular weight (Mw), the molecular weight distribution (Mw/Mn), the content [mass%] of 2-ethylhexyl acrylate (2EHA) in the polymer block (B), and the total content [mass%] of the polymer blocks (A) in the acrylic block copolymers A to H obtained in Synthetic Examples 1 to 8.

The content of 2EHA forming the polymer block (B) was calculated from the mass of the monomer or monomers constituting the polymer block (B).

**[Table 1]**

| Acrylic block copolymer | Type of blocks | Weight average molecular weight (Mw) | Molecular weight distribution (Mw/Mn) | 2EHA^{∗}) content [mass%] in polymer block (B) | Total content [mass%] of two terminal blocks |
|---|---|---|---|---|---|
| Copolymer A | Triblock | 200,000 | 1.1-1.3 | 100 | 13 |
| Copolymer B | Triblock | 160,000 | 1.1-1.3 | 100 | 16 |
| Copolymer C | Triblock | 120,000 | 1.1-1.3 | 100 | 16 |
| Copolymer D | Triblock | 260,000 | 1.1-1.3 | 100 | 15.8 |
| Copolymer E | Triblock | 210,000 | 1.1-1.3 | 0 | 10.7 |
| Copolymer F | Diblock | 180,000 | 1.1-1.3 | 100 | 6. 0 |
| Copolymer G | Triblock | 160,000 | 1.1-1.3 | 100 | 20.2 |
| Copolymer H | Triblock | 90,000 | 1.1-1.3 | 100 | 10.2 |

| | | | | | |
|---|---|---|---|---|---|
| ^{∗}) 2EHA: 2-Ethylhexyl acrylate | | | | | |

### <<Examples 1 to 3 and Comparative Examples 1 to 5>>

Adhesive tapes were prepared using the acrylic block copolymers A to H obtained in Production Examples 1 to 8. Specifically, the acrylic block copolymers A to H obtained in Synthetic Examples 1 to 8 were each dissolved into toluene to give a solution having a concentration of 30 mass%. The solutions were each applied to coat a polyethylene terephthalate film (TOYOBO ESTER film E5000, thickness: 50 µm) with a coater so that the dry thickness of the adhesive layer would be 25 µm. The films were dried and heat treated at 100°C for 3 minutes. Adhesive tapes were thus fabricated. The adhesive tapes fabricated were tested to evaluate the 180° peel strength, the holding power and the ball tack. When a need arose to laminate the adhesive tape to an adherend in the evaluation of 180° peel strength and holding power, a 2 kg roller was moved on the tape back and forth twice at a speed of 10 mm/sec. The results are described in Table 2 below.

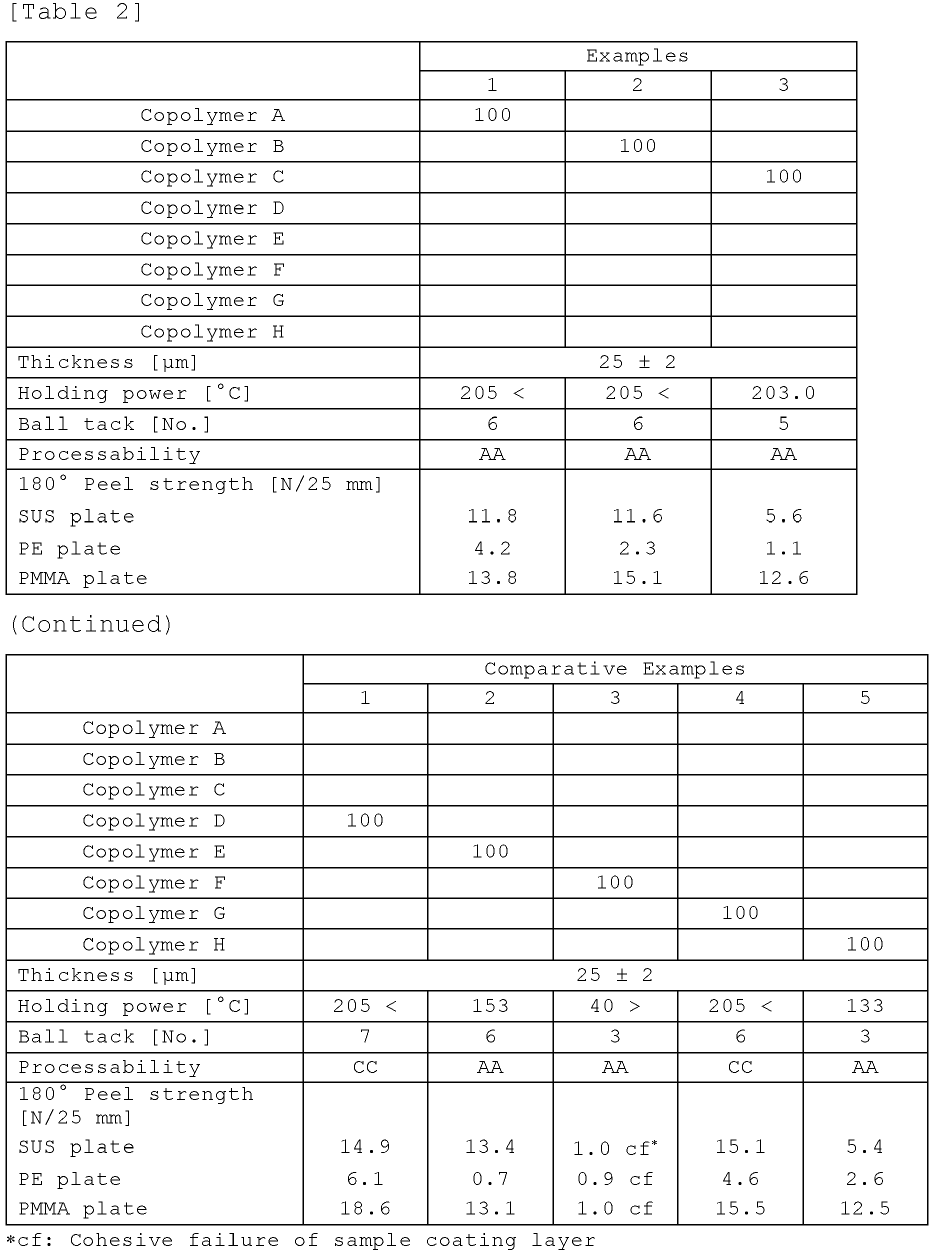

The acrylic triblock copolymers A to C (Examples 1 to 3) of the present invention had a polymer block (B) including 95 mass% or more of 2-ethylhexyl acrylate units, had a weight average molecular weight (Mw) of 110,000 to 250,000, and had a total content of polymer blocks (A) at both ends of 18 mass% or less. As can be seen from the results of Table 2, these inventive acrylic triblock copolymers attained excellent adhesion force and high holding power, and further exhibited excellent handleability at the time of manufacturing and also excellent processability. In contrast, the copolymer H (Comparative Example 5) having an Mw of less than 100,000 was inferior in holding power and ball tack, and the copolymer E (Comparative Example 2) in which the polymer block (B) contained less than 95 mass% of 2-ethylhexyl acrylate units was poor in holding power and adhesion force with respect to polyethylene. The copolymer F (Comparative Example 3), which was a diblock copolymer, had a low cohesion force and compared unfavorably to the triblock copolymers comprehensively in terms of adhesion force, tack and holding power. While the copolymer D (Comparative Example 1) having an Mw of greater than 250,000, and the acrylic triblock copolymer G (Comparative Example 4) having a total content of the polymer blocks (A) of more than 18 mass% were excellent in adhesion properties (holding power, tack and adhesion force), but exhibited very low fluidity when melted and were thus poor in handleability at the time of manufacturing and also in processability.

### INDUSTRIAL APPLICABILITY

The acrylic triblock copolymer of the present invention has excellent adhesive performance such as adhesion force and holding power. Further, the adhesive composition including the copolymer of the present invention may be used singly as an adhesive sheet, and is expected to find use as an adhesive in various fields such as protective films, masking, tying, packaging, labeling, decoration and display, bonding, sealing, and sanitary materials.

## Claims

1. An acrylic triblock copolymer comprising:
a polymer block (A) including methacrylic acid ester units, and
a polymer block (B) including 95 mass% or more of acrylic acid ester units represented by the general formula (1):
CH₂=CH-COOR¹
[wherein R¹ denotes a C7-C12 organic group],
the copolymer having a triblock structure represented by (A)-(B)-(A),
the copolymer having a weight average molecular weight (Mw) of 110,000 to 250,000,
the total content of the blocks (A) at both ends being 18 mass% or less.

2. The acrylic triblock copolymer according to claim 1, wherein the total content of the blocks (A) at both ends is 6 to 14 mass%.

3. An adhesive composition comprising the acrylic triblock copolymer according to claim 1 or 2.
